(19) Europäisches Patentamt
European Patent Office
Office européen des brevets

(11) **EP 2 312 142 B1**

(12) **EUROPEAN PATENT SPECIFICATION**

(45) Date of publication and mention
of the grant of the patent:
**05.12.2018 Bulletin 2018/49**

(51) Int Cl.:
**F02D 35/02** *(2006.01)*    **F02D 41/30** *(2006.01)*

(21) Application number: **10186426.2**

(22) Date of filing: **04.10.2010**

(54) **Combustion timing prediction method and apparatus for compression ignition internal combustion engine**

Verfahren und Vorrichtung zur Prädiktion des Zündzeitpunkts eines Verbrennungsmotors mit Kompressionszündung

Procédé et dispositif de prédiction du point d'allumage pour moteur à combustion interne à allumage par compression

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.10.2009 JP 2009232184**

(43) Date of publication of application:
**20.04.2011 Bulletin 2011/16**

(73) Proprietors:
• **Cosmo Oil Co., Ltd.**
  **Tokyo 105-8528 (JP)**
• **Mazda Motor Corporation**
  **Aki-gun**
  **Hiroshima 730-8670 (JP)**

(72) Inventors:
• **Tanaka, Shigeyuki**
  **Tokyo 176-0025 (JP)**
• **Kusaka, Jin**
  **Tokyo 112-006 (JP)**
• **Youso, Takashi**
  **Hiroshima 730-8670 (JP)**
• **Yamakawa, Masahisa**
  **Hiroshima 730-8670 (JP)**

(74) Representative: **Herrmann, Uwe**
**Lorenz Seidler Gossel**
**Rechtsanwälte Patentanwälte**
**Partnerschaft mbB**
**Widenmayerstraße 23**
**80538 München (DE)**

(56) References cited:
**EP-A1- 1 890 024    EP-A2- 1 473 452**
**JP-A- 2006 002 637**

• **VILJOEN, C., YATES, A., SWARTS, A., BALFOUR, G. ET AL.: "An Investigation of the Ignition Delay Character of Different Fuel Components and an Assessment of Various Autoignition Modelling Approaches", SAE 2005 TRANSACTIONS JOURNAL OF FUELS AND LUBRICANTS, 11 May 2005 (2005-05-11), XP002768981, DOI: 10.4271/2005-01-2084 ISBN: 978-0-7680-1690-1**
• **SHIBATA, G. AND URUSHIHARA, T.: "Auto-Ignition Characteristics of Hydrocarbons and Development of HCCI Fuel Index", HOMOGENEOUS CHARGE COMPRESSION IGNITION ENGINES, no. SP-2100, 16 April 2007 (2007-04-16), XP002768982, DOI: 10.4271/2007-01-0220**
• **KALGHATGI, G.: "Auto-Ignition Quality of Practical Fuels and Implications for Fuel Requirements of Future SI and HCCI Engines", SI COMBUSTION AND DIRECT INJECTION SI ENGINE TECHNOLOGY, no. SP-1972, 11 April 2005 (2005-04-11), page 20PP, XP002768984, ISSN: 0148-7191, DOI: 10.4271/2005-01-0239**
• **Heywood, J.: "Internal Combustion Engine Fundamentals", 31 December 1996 (1996-12-31), McGraw-Hill, XP002768983, pages 542-543, * equation 10.35 ***

**Description**

**Background of the Invention**

**Field of the Invention**

The present invention belongs to a technical field relating to a combustion timing prediction method for a compression self-ignition internal combustion engine that causes a hydrocarbon fuel in a combustion chamber to perform compression self-ignition, a control method for the compression self-ignition internal combustion engine, and a compression self-ignition internal combustion engine system,

**Description of the Background Art**

A compression self-ignition internal combustion engine (also known as a Homogeneous Charge Compression Ignition (HCCI) internal combustion engine) for Causing a hydrocarbon fuel (gasoline or the like) in a combustion chamber to perform compression self-ignition is known in the related art (see Japanese Patent Application Laid-open No. 2008-095539 and Japanese Patent Application Laid-open No. 2001-355449, for example). In this type of compression self-ignition internal combustion engine, fuel and air are mixed substantially evenly in the combustion chamber in advance, and a resulting air-fuel mixture is compressed in a compression stroke so as to increase in temperature. Accordingly, a collision energy between a fuel molecule and an oxygen molecule increases, and at a point where the collision energy exceeds a threshold, the fuel self-ignites. In the compression self-ignition internal combustion engine, an output torque of the internal combustion engine varies according to a self-ignition timing, and therefore the self-ignition timing, or in other words a fuel combustion timing, must be predicted accurately.

Gen Shibata and one other, "A Study of Auto-Ignition Characteristics of Hydrocarbons and the Idea of HCCI Fuel Index (Second Report)", Society of Automotive Engineers of Japan 2007 Annual Congress (Spring), Pre-Congress Collection of Printed Scientific Lectures No. 54-07, Society of Automotive Engineers of Japan, May 2007, p. 29-34, for example, proposes predicting a likelihood of fuel self-ignition on the basis of an octane number of the fuel and a temperature condition.

"An Investigation of the Ignition Delay Character of Different Fuel Components and an Assessment of Various Autoignition Modelling Approaches" by C. Viljoen and others in Society of Automotive Engineers International, 11-05-2005, is another example of assessment of ignition delays.

However, in an investigation into the prediction method according to the aforesaid proposed example, it was found that differences occur in the self-ignition property of fuels having the same octane number due to differences in the fuel components, and it is therefore difficult to predict the self-ignition timing, or in other words the fuel combustion timing, accurately using the prediction method according to the aforesaid proposed example.

**Summary of the Invention**

The present invention has been designed in consideration of these points, and an object thereof is to ensure that a combustion timing of a hydrocarbon fuel can be predicted as accurately as possible in a compression self-ignition internal combustion engine and that an output torque of the internal combustion engine can be stabilized on the basis of the prediction result.

To achieve the object described above, the present invention is a combustion timing prediction method for a compression self-ignition internal combustion engine that causes a hydrocarbon fuel to perform compression self-ignition in a combustion chamber, with which a combustion timing of the hydrocarbon fuel used in the compression self-ignition internal combustion engine is predicted, including the steps of: specifying types of a plurality of hydrocarbon components contained in the hydrocarbon fuel and proportions of the respective types in the hydrocarbon fuel; calculating, on the basis of a temperature in the combustion chamber of the internal combustion engine, a value of a first function serving as a function of the temperature for each of the specified types; calculating, on the basis of the proportion and the first function relating to each of the types, a value of a second function, which is a function that increases in value in response to an increase of the value of the first function and/or the proportion, for each of the specified types; integrating the values of the second function relating to the respective types: and predicting, on the basis of the integrated value of the values of the second function, the combustion timing of the hydrocarbon fuel in the internal combustion engine to be steadily later as the integrated value increases.

**Brief Description of the Drawings**

Fig. 1 is a schematic diagram showing the constitution of a compression self-ignition internal combustion engine system according to an embodiment of the present invention;

Fig. 2 is a view showing an example of a control map for selecting a combustion mode (an HCCI mode or an SI mode (a spark ignition mode)) of an engine;

Fig. 3 is a flowchart showing a control operation executed by an engine control unit;

Fig. 4 is a graph showing a relationship between an ignition delay time and a fuel injection timing;

Fig. 5A is a graph showing a relationship between an intake air temperature and a coefficient $C_2$ (more specifically, $C_2/[Fuel_2]$), Fig. 5B is a graph showing a relationship between the intake air temperature and a coefficient $C_3$ (more specifically, $C_3/[Fuel_3]$), and Fig. 5C is a graph showing a relationship between the intake air temperature and a coefficient $C_4$ (more specifically, $C_4/[Fuel_4]$);

Figs. 6A to 6C are graphs showing a relationship between a crank angle after compression top dead center and a heat generation rate when the intake air temperature is varied, with respect to various types of fuels;

Fig. 7 is a graph showing results of an investigation into a relationship between the ignition delay time and a molar density of a fuel in a combustion chamber at compression top dead center, with respect to a fuel containing only paraffin hydrocarbon;

Fig. 8 is a graph showing a comparison between a prediction result obtained using a paraffin model equation and an experiment result with respect to a fuel containing only paraffin hydrocarbon;

Figs. 9A to 9F are graphs showing a comparison between prediction results obtained using the paraffin model equation and experiment results when the intake air temperature is varied, with respect to a 70 RON mixed fuel;

Fig. 10 is a graph showing a comparison between a prediction result obtained using a mixed fuel model equation and an experiment result with respect to a 70 RON mixed fuel; and

Fig. 11 is a graph showing a comparison between a prediction result obtained using the mixed fuel model equation and an experiment result with respect to a 90 RON fuel and regular gasoline.

## Description of the Preferred Embodiments

An embodiment of the present invention will be described in detail below on the basis of the drawings.

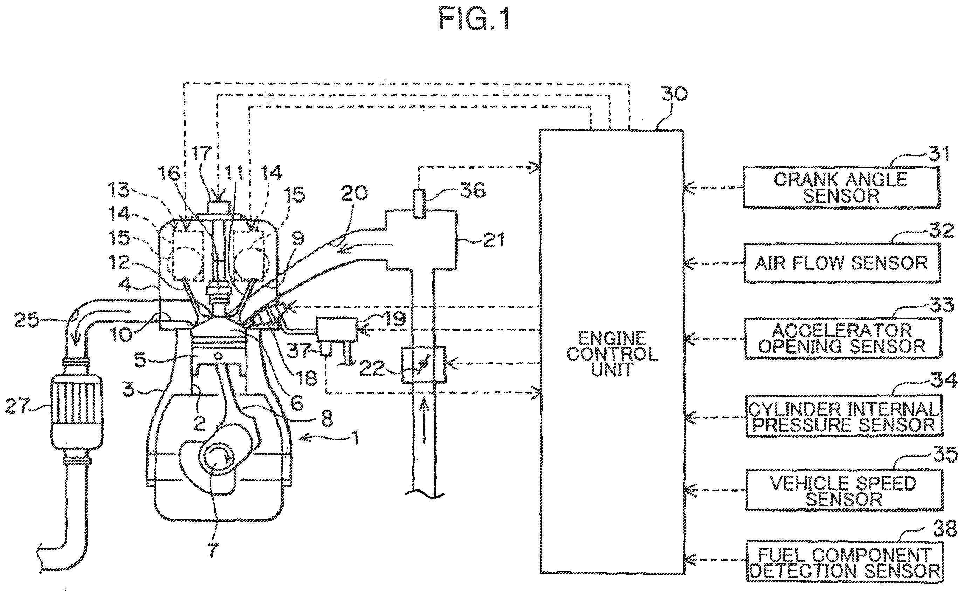

Fig. 1 shows a compression self-ignition internal combustion engine system according to an embodiment of the present invention. This compression self-ignition internal combustion engine system includes an engine 1 serving as a compression self-ignition internal combustion engine (also known as a homogeneous charge compression ignition internal combustion engine) installed in a vehicle such as an automobile, and an engine control unit 30 serving as a controller for controlling the engine 1.

The engine 1 is a multi-cylinder engine that uses hydrocarbon fuel (gasoline in particular), and includes a cylinder block 3 having a plurality of cylinders 2 (four or six, for example) disposed in series in an orthogonal direction to a paper surface of Fig. 1, and a cylinder head 4 disposed on an upper side of the cylinder block 3. A piston 5 is inserted into each cylinder 2, and a combustion chamber 6 of a predetermined volume is formed between an upper surface of the piston 5 and a lower surface of the cylinder head 4. The piston 5 is coupled to a crankshaft 7 via a connecting rod 8. The crankshaft 7 rotates about a central axis of the crankshaft 7 as the piston 5 reciprocates.

An intake port 9 and an exhaust port 10 each opening onto a ceiling portion of the combustion chamber 6 are respectively formed in the cylinder head 4 in relation to each cylinder 2. The intake port 9 extends diagonally upward from the ceiling portion of the combustion chamber 6 so as to open onto an intake-side (the right side in Fig. 1) side wall of the cylinder head 4, while the exhaust port 10 opens onto an exhaust-side (the left side in Fig. 1) side wall of the cylinder head 4. An intake passage 20 and an exhaust passage 25 are connected respectively to the respective opening portions of the intake port 9 and the exhaust port 10.

An intake valve 11 and an exhaust valve 12 are provided in the cylinder head 4 for each cylinder 2. The intake port 9 and the exhaust port 10 are opened and closed by the intake valve 11 and the exhaust valve 12, respectively. The intake valve 11 and the exhaust valve 12 are respectively driven to open and close in synchronization with the rotation of the crankshaft 7 by a valve mechanism 13 that is provided on the cylinder head 4 and includes a pair of camshafts (not shown) and so on.

A variable valve lift mechanism (to be referred to hereafter as a VVL) 14 and a variable valve timing mechanism (to be referred to hereafter as a VVT) 15 are incorporated into the respective valve mechanisms 13 of the intake valve 11 and the exhaust valve 12. The VVL 14 modifies a lift (valve opening amount) of the intake valve 11 and the exhaust valve 12 in accordance with an engine operating condition by modifying a rocking locus of a cam attached to a cam shaft (not shown) on the basis of a command from the engine control unit 30.

The VVT 15 modifies an open/close timing (a phase angle) of the intake valve 11 and the exhaust valve 12 in accordance with the engine operating condition by modifying a rotary phase of the cam shaft (not shown) relative to the crankshaft 7 on the basis of a command from the engine control unit 30. In accordance with the operations of the VVL 14 and the VVT 15, a lift characteristic of the intake valve 11 and the exhaust valve 12 is modified. As a result, an intake air amount and an amount of residual burned gas (internal EGR) for each cylinder 2 are adjusted. Note that typical mechanisms known to persons skilled in the art are used as the VVL 14 and the VVT 15, and therefore detailed description thereof has been omitted.

Further, a spark plug 16 is provided in the cylinder head 4 to face the combustion chamber 6 of each cylinder 2. The spark plug 16 performs electrical discharge (spark ignition) at a predetermined timing in accordance with a supply of power from an ignition circuit 17 provided above the spark plug 16. Furthermore, a fuel injection valve 18 is provided in the cylinder head 4 to face the combustion chamber 6 from the side of the intake side. Fuel from a fuel tank is supplied to the fuel injection valve 18 through a fuel passage by a high-pressure fuel pump 19. Note that the high-pressure fuel pump 19 is driven by a spool valve, for example, and is capable of varying a pressure at which the fuel is supplied to the fuel injection valve 18, or in other words a fuel pressure, freely in a wide range extending from a low pressure to a high pressure. The fuel injection valve 18 injects the fuel directly into the combustion chamber 6 at a predetermined injection timing (an intake stroke or the like) such that an air-fuel mixture having a predetermined air-fuel ratio is generated in the combustion chamber 6.

The intake passage 20 is disposed on the intake side of the engine 1. A downstream end of the intake passage 20, using an air flow direction (a direction indicated by an arrow) as a reference, is connected to the intake-side side wall of the cylinder head 4 so as to communicate with the intake port 9. Air, from which foreign matter such as dust has been removed by an air cleaner (not shown), passes through the intake passage 20 and the intake port 9 in that order, and is thus supplied to the combustion chamber 6 of each cylinder 2.

A surge tank 21 is provided at a midway point in the intake passage 20. On the upstream side of the surge tank 21, the intake passage 20 is constituted by a single passage shared by all cylinders (to be referred to hereafter as a common intake passage portion). A by-wire electronic control throttle valve 22, for example, is disposed in the common intake passage portion. Meanwhile, on the downstream side of the surge tank 21, the intake passage 20 is constituted by branched passages corresponding to the respective cylinders 2 (to be referred to hereafter as a branched intake passage portion). A flow rate of the air is adjusted by the throttle valve 22, whereupon the air passes through the branched intake passage portion and is thus introduced into the combustion chamber 6 of each cylinder 2.

The exhaust passage 25 is disposed on the exhaust side of the engine 1. An upstream end of the exhaust passage 25, using an exhaust gas flow direction (a direction indicated by an arrow) as a reference, is connected to the exhaust-side side wall of the cylinder head 4 so as to communicate with the exhaust port 10. After the air-fuel mixture has been burned in the combustion chamber 6 of each cylinder 2, burned gas (exhaust gas) generated by the combustion is discharged to the outside through the exhaust passage 25. A catalytic converter 27 using a three-way catalyst is provided at a midway point in the exhaust passage 25 to purify harmful components contained in the exhaust gas. In the engine 1, a small amount of NOx is generated, and therefore a special apparatus for increasing a NOx treatment efficiency such as a NOx trapping catalyst, for example, is not provided.

The engine control unit 30 is constituted by a computer having a central processing unit (CPU), various memories, and so on. A crank angle sensor 31 that detects a rotation angle (crank angle) of the crankshaft 7, an air flow sensor 32 that detects the amount of air flowing through the intake passage 20, an accelerator opening sensor 33 that detects an operation amount of an accelerator pedal (not shown), or in other words an accelerator opening, a cylinder internal pressure sensor 34 that detects a pressure in the combustion chamber 6 of each cylinder 2, or in other words a cylinder internal pressure, and a vehicle speed sensor 35 that detects a speed of the vehicle installed with the engine 1. are electrically connected to the engine control unit 30. Here, the cylinder internal pressure sensor 34 is formed integrally with the spark plug 16 and built into the spark plug 16. Note that the cylinder internal pressure sensor 34 may be formed integrally with the fuel injection valve 18.

Further, an intake air temperature sensor 36 that detects a temperature of air in the surge tank 21, or in other words the temperature of the air supplied to the combustion chamber 6 of each cylinder 2 (to be referred to hereafter as an intake air temperature), a combustion pressure sensor 37 that detects a pressure of the fuel supplied to the fuel injection valve 18 from the high-pressure fuel pump 19, or a fuel injection pressure, and a fuel component detection sensor 38 that is provided in a fuel tank of the vehicle to detect components of the hydrocarbon fuel inside the fuel tank are electrically connected to the engine control unit 30.

Control information detected by the various sensors 31 to 38 described above is input into the engine control unit 30 in the form of electric signals.

The fuel component detection sensor 38 detects the types of a plurality of hydrocarbon components contained in the hydrocarbon fuel in the fuel tank and the proportion of each type in the hydrocarbon fuel. In this embodiment, four types of hydrocarbon components, namely paraffin hydrocarbon, aromatic hydrocarbon, olefin hydrocarbon, and naphthene hydrocarbon, are detected.

Paraffin hydrocarbon is a generic name for an alkane (open chain saturated hydrocarbon) having at least 20 carbon atoms, and includes normal paraffin and isoparaffin.

Aromatic hydrocarbon is a type of unsaturated hydrocarbon having a single ring or a plurality of planar rings constituted by six carbon atoms in which single bonds and double bonds are arranged alternately and the electron is delocalized. The aromatic hydrocarbon having the simplest structure is benzene, which is a cyclic compound constituted by six carbons known as a benzene ring.

Olefin hydrocarbon (an alkene) is an organic compound expressed by the chemical formula $C_nH_{2n}$ (where n is a natural number of at least 2), and is a type of unsaturated hydrocarbon. It is also known as ethylene hydrocarbon. It has one double bond among C-C bonds.

Naphthene hydrocarbon is a type of saturated hydrocarbon having a cyclic structure in the molecule. It is also known as cycloparaffin hydrocarbon and is expressed by the same molecular formula $C_nH_{2n}$ as olefin hydrocarbon. Examples thereof include five-carbon cyclopentane, six-carbon cyclohexane, and so on.

On the basis of detection values from the various sensors 31 to 38 described above, the engine control unit 30 performs various types of control on the engine 1 by controlling operations of the VVL 14, the VVT 15, the ignition circuit 17, the fuel injection valve 18, the high-pressure fuel pump 19, the throttle valve 22, and so on in accordance with the operating condition of the engine 1. For example, the engine control unit 30 controls an intake/discharge operation relating the engine 1 in accordance with the operating condition of the engine 1 by controlling the VVL 14 and VVT 15 to modify the lift characteristic of the intake valve 11 and the exhaust valve 12. Further, the engine control unit 30 controls the fuel injection amount, fuel pressure (fuel injection pressure), injection pulse width and fuel injection timing of the fuel injection valve 18, a driving condition and a discharge pressure of the high-pressure fuel pump 19, and so on in accordance with the operating condition of the engine 1.

The engine control unit 30 switches a combustion mode between a homogeneous charge compression self-ignition mode (to be referred to hereafter as an HCCI mode) in which the air-fuel mixture (hydrocarbon fuel) generated in the intake stroke is caused to perform compression self-ignition in the vicinity of compression top dead center without using the spark plug 16, and a spark ignition mode (to be referred to hereafter as an SI mode) in which the air-fuel mixture is ignited forcefully through spark ignition using the spark plug 16.

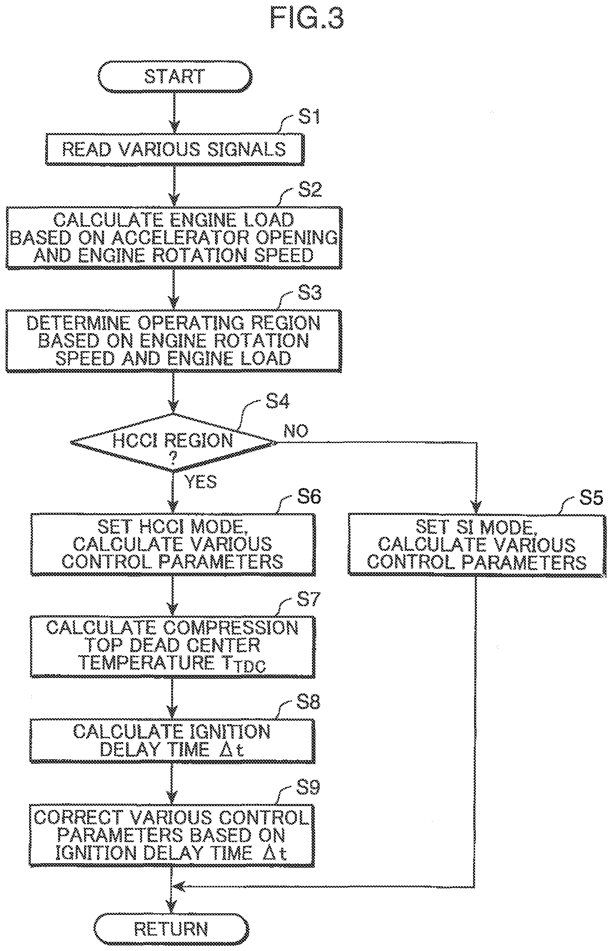

A control operation executed by the engine control unit 30 will now be described on the basis of a flowchart shown in Fig. 3.

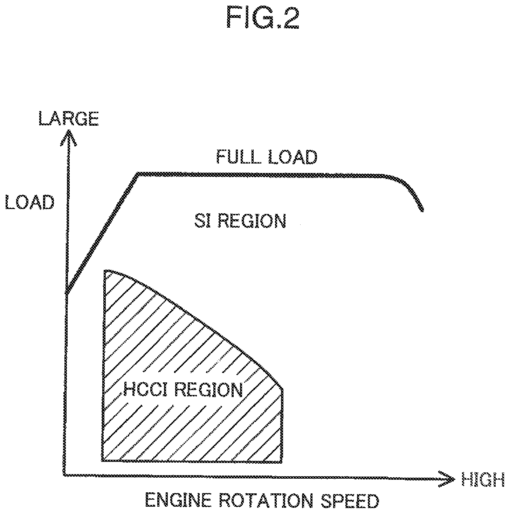

In a first step S1, various signals are read, and in a following step S2, an engine load (target torque) is calculated on the basis of the accelerator opening from the accelerator opening sensor 33 and an engine rotation speed determined from the crank angle from the crank angle sensor 31. Next, in a step S3, a determination is made on the basis of the engine rotation speed and the engine load as to whether the operating condition of the engine 1. is in an HCCI region or an SI region on a control map shown in Fig. 2.

As shown in Fig. 2, two operating regions, namely the SI region and the HCCI region, are set on the control map. The combustion mode of the engine is selected according to whether the operating condition of the engine 1 is in the SI region or the HCCI region. More specifically, in the SI region, which corresponds to a high rotation region or a high load region, the SI mode is selected, and in the HCCI region, which corresponds to a low rotation and low load region, the HCCI mode is selected.

Next, in a step S4, a determination is made as to whether or not the operating condition of the engine 1 is in the HCCI region. When NO is obtained in the determination of the step S4, or in other words when the operating condition of the engine 1 is in the SI region, the routine advances to a step S5, in which the SI mode is set as the combustion mode and various control parameters corresponding to the SI mode are calculated in relation to the engine 1 on the basis of the engine rotation speed, the engine load, and so on. Following the step S5, the routine returns.

During an operation in the SI mode, an opening timing of the exhaust valve 12 and an opening timing of the intake valve 11 are set such that in the vicinity of exhaust top dead center (top dead center between an exhaust stroke and the intake stroke) in each cylinder cycle, the opening timings of the two valves 11, 12 slightly overlap. After exhaust top dead center passes and the intake valve 11 opens, a single normal fuel injection is performed by the fuel injection valve 18. The air-fuel mixture is then ignited by the spark plug 16 in the vicinity of compression top dead center (top dead center between the compression stroke and an expansion stroke), whereupon the air-fuel mixture, or in other words the fuel, are burned through flame propagation.

When YES is obtained in the determination of the step S4, or in other words when the operating condition of the engine 1 is in the HCCI region, the routine advances to a step S6, in which the HCCI mode is set as the combustion mode and various control parameters corresponding to the HCCI mode are calculated in relation to the engine 1 on the basis of the engine rotation speed, the engine load, and so on.

During an operation in the HCCI mode, the opening timing of the exhaust valve 12 and the opening timing of the intake valve 11 are set such that a negative overlap period (NVO period), in which both of the valves 11, 12 are closed, exists in the vicinity of exhaust top dead center. After the NVO period ends and the intake valve 11 opens after exhaust top dead center, fuel injection is performed by the fuel injection valve 18. The injected fuel forms an air-fuel mixture in the combustion chamber 6, and in the vicinity of compression top dead center, the air-fuel mixture ignites autonomously (self-ignites, i.e. without the help of other igniting means). As a result, the air-fuel mixture (fuel) burns rapidly without flame propagation. In this case, the combustion temperature is lower than the combustion temperature generated during spark ignition, and therefore the amount of generated NOx is greatly reduced.

In this embodiment, a compression top dead center temperature $T_{TDC}$ is calculated as the temperature in the combustion chamber 6 at the start of an operation in the HCCI mode (step S7). The compression top dead center temperature $T_{TDC}$ is determined from the pressure detected by the cylinder internal pressure sensor 35 or from the intake air temperature detected by the intake air temperature sensor 36 and an effective compression ratio.

An ignition delay time At for predicting the combustion timing of the hydrocarbon fuel is then calculated on the basis of the types and proportions of the hydrocarbon components contained in the hydrocarbon fuel and the compression top dead center temperature $T_{TDC}$ (step S8).

More specifically, the combustion timing is predicted in the following manner. First, the engine control unit 30 specifies the types of the plurality of hydrocarbon components contained in the hydrocarbon fuel and the respective proportions of the types of hydrocarbon components in the hydrocarbon fuel on the basis of the detection result obtained by the fuel component detection sensor 38. Note that predetermined types and proportions may be specified without relying on the detection performed by the fuel component detection sensor 38. This is particularly effective in a case where the employed fuel is fixed.

Next, the engine control unit 30 calculates a value of a first function F1; serving as a function of the compression top dead center temperature $T_{TDC}$ for each type of specified hydrocarbon component on the basis of the compression top dead center temperature $T_{TDC}$ in the combustion chamber 6. Here, i is a natural number between 1 and 4, where i = 1 indicates paraffin hydrocarbon, i = 2 indicates aromatic hydrocarbon, i = 3 indicates olefin hydrocarbon, and i = 4 indicates naphthene hydrocarbon. For example, $F1_1$ is the first function set in relation to paraffin hydrocarbon.

In this embodiment, the first function $F1_i$ of each type is expressed by Equation (1).

$$F1_i = A \times T_{TDC}^n \times \exp\left(f\left(MON_i\right)/T_{TDC}\right) \tag{1}$$

Here, $A = 4.60 \times 10^{-3}$, and $n = 5.71$. Further, $f(MON_i)$ is a function of $MON_i$, which is expressed by Equation (2). $MON_i$ is a motor octane number of each type.

$$f\left(MON_i\right) = -71.4 \times MON_i + 1.09 \times 10^4 \tag{2}$$

Hence, in this embodiment, it may be said that the first function $F1_i$ of each type is a function of the compression top dead center temperature $T_{TDC}$ and the motor octane number $MON_i$ of each type.

Next, on the basis of the value of the first function $F1_i$ of each type and the aforementioned proportions, the engine control unit 30 calculates a value of a second function $F2_i$, which is a function that increases in value in response to an increase of the value of the first function $F1_i$ and/or the proportions, for each of the specified types. In this embodiment, the second function $F2_i$ of each type is expressed by Equation (3).

$$F2_i = C_i \times F1_i \times M_i \tag{3}$$

Here, $Mi = [Fuel_i]^{g(MONi)}$, where $[Fuel_i]$ is a molar density of each type in the combustion chamber 6 at compression top dead center. The molar density of each type is determined from the proportion, the air-fuel ratio, and the volume of the combustion chamber 6 at compression top dead center. $C_i$ will be described below. $g(MON_i)$ is a function of $MON_i$, which is expressed by Equation (4).

$$g\left(MON_i\right) = -0.400 \times 10^{-2} \times MON_i + 0.393 \tag{4}$$

Next, the engine control unit 30 integrates the values of the second function $F2_i$ relating to the respective types. On the basis of the integrated value, the combustion timing of the hydrocarbon fuel in the engine 1 is predicted to be steadily later as the integrated value increases. In this embodiment, the combustion timing of the hydrocarbon fuel is predicted using the ignition delay time At, which is a time extending from a crank angle of 90° before compression top dead center to a timing at which a mass burning rate (MBF) of the fuel reaches 50%. An inverse of the ignition delay time $\Delta t$ corresponds to the integrated value. In other words, the ignition delay time $\Delta t$ is determined from the following Equation (5). In Equation (5), the value of the second function $F2_i$ relating to unspecified types (i.e. types not contained in the fuel) following specification of the types and proportions of the hydrocarbon components contained in the hydrocarbon fuel is set at zero.

$$1/\Delta t = F2_1 + F2_2 + F2_3 + F2_4$$

$$= C_1 \times F1_1 \times M_1 + C_2 \times F1_2 \times M_2$$

$$+ C_3 \times F1_3 \times M_3 + C_4 \times F1_4 \times M_4 \tag{5}$$

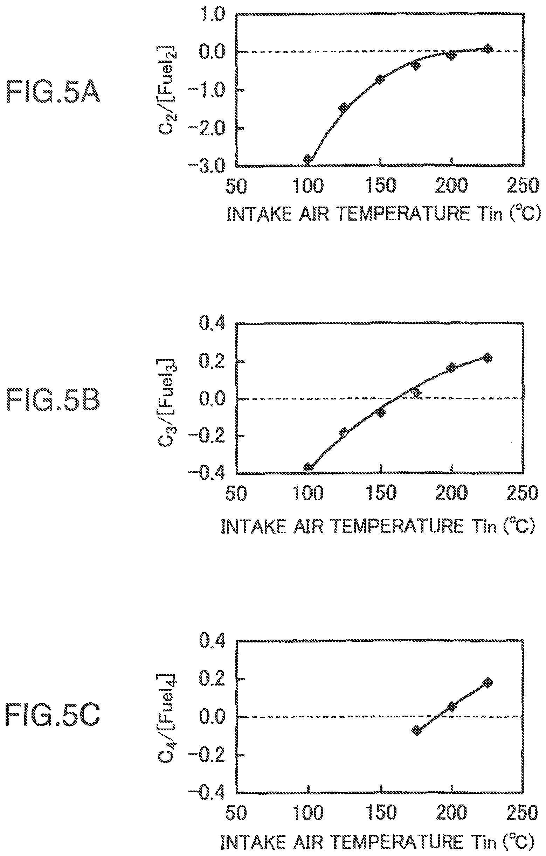

$C_i$ is a coefficient indicating a reaction acceleration effect or a reaction suppression effect (an interaction) of the respective types relative to a reaction of the paraffin hydrocarbon that is normally contained in the fuel. A coefficient $C_1$ is set at 1. Coefficients $C_2$, $C_3$, and $C_4$ indicate interaction between the paraffin hydrocarbon and the aromatic hydrocarbon, olefin hydrocarbon, and naphthene hydrocarbon, respectively. When the coefficients $C_2$, $C_3$, and $C_4$ are positive, this indicates an acceleration effect in relation to the reaction of the paraffin hydrocarbon, and therefore the integrated value increases (i.e. the ignition delay time At decreases such that the combustion timing is advanced). When the coefficients $C_2$, $C_3$, and $C_4$ are negative, on the other hand, this indicates a suppression effect in relation to the reaction of the paraffin hydrocarbon, and therefore the integrated value decreases (i.e. the ignition delay time $\Delta t$ increases such that the combustion timing is retarded). The values of the coefficients $C_2$, $C_3$, and $C_4$ can be determined such that a difference between a measurement result of the ignition delay time $\Delta t$ and a calculation result (prediction result) decreases, and as shown in Figs. 5A to 5C, the values of the coefficients $C_2$, $C_3$, and $C_4$ vary in accordance with the intake air temperature when the molar density of each type in the combustion chamber 6 at compression top dead center is constant (i.e. the coefficients increase as the intake air temperature rises). Aromatic hydrocarbon always exhibits a reaction suppression effect, regardless of the intake air temperature, Olefin hydrocarbon and naphthene hydrocarbon exhibit a reaction acceleration effect when the intake air temperature is higher than a predetermined temperature and exhibit a reaction suppression effect at or below the predetermined temperature.

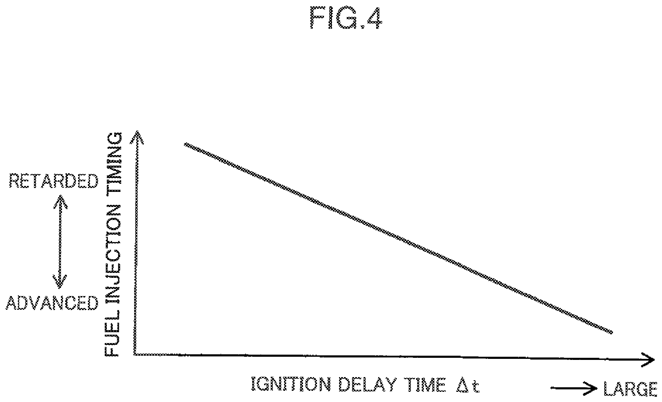

The engine control unit 30, after calculating the ignition delay time $\Delta t$ using Equation (5), controls various control parameters of the engine 1 (in this embodiment, the control parameters calculated previously in the step S6 are corrected) in a step S9 on the basis of the calculated ignition delay time $\Delta t$ such that the combustion timing aligns with a predetermined timing (such that the ignition timing is in the vicinity of compression top dead center, for example). For example, as shown in Fig. 4, the fuel injection timing is advanced as the ignition delay time At increases (the combustion timing is retarded) so that the fuel and air are mixed evenly. Alternatively, a cylinder internal temperature is increased as the ignition delay time $\Delta t$ increases. The cylinder internal temperature can be increased by increasing the effective compression ratio or increasing the amount of residual burned gas (internal EGR). Following the step S9, the routine returns.

The reason why the combustion timing of the hydrocarbon fuel can be predicted accurately from Equation (5) will now be described by describing the manner in which Equation (5) was derived and experiment results.

An engine used in an experiment was a direct injection DOHC 4 valve engine having a bore diameter of 87.5 mm, a stroke of 83.1 mm, a geometric compression ratio of 14, and a pent-roof type combustion chamber. The engine was operated by natural aspiration under operating conditions of engine cooling water temperature: 88°C, oil temperature: 90°C, and engine rotation speed: 1500 rpm. Further, the intake air temperature was raised (between 100°C and 225°C) using an external intake air heating apparatus so that phenomena could be understood more easily. The air-fuel ratio was set at 40 to 85.

The employed fuel is shown in Table 1.

[Table 1]

| | | | 70 RON | | | | 80 RON | 90 RON | | | |
|---|---|---|---|---|---|---|---|---|---|---|---|
| | | | Para 70 | Arom 70 | Ole 70 | Naph 70 | Para 80 | Para 90 | Arom 90 | Arom-Ole 90 | Arom-Naph 90 |
| RON | | | 70.8 | 71.0 | 70.6 | 70.3 | 81.2 | 90.5 | 90.1 | 90.8 | 90.1 |
| MON | | | 73.3 | 67.3 | 69.7 | 71.9 | 83.3 | 89.7 | 85.1 | 82.6 | 83.7 |
| DISTILLATION CHARACTERISTIC (°C) | | 10% | 57.0 | 56.0 | 56.5 | 55.5 | 57.5 | 57.5 | 58.0 | 55.5 | 58.5 |
| | | 50% | 101.5 | 99.5 | 101.5 | 99.5 | 102.0 | 101.0 | 101.5 | 100.0 | 101.0 |
| | | 90% | 152.0 | 148.0 | 152.0 | 147.5 | 151.0 | 150.5 | 150.0 | 149.5 | 148.5 |
| KINEMATIC VISCOSITY (mm$^2$/s) | | | 0.57 | 0.52 | 0.54 | 0.63 | 0.60 | 0.62 | 0.51 | 0.51 | 0.55 |
| SURFACE TENSION (mN/m) | | | 18.1 | 20.0 | 18.8 | 1.9.8 | 17.9 | 18.1 | 19.8 | 19.7 | 20.6 |
| COMPOSITION (vol%) | NORMAL PARAFFIN | | 16.8 | 37.2 | 11.1 | 15.6 | 4.6 | 4.3 | 12.0 | 4.3 | 6.9 |
| | ISO-PARAFFIN | | 83.1 | 36.1 | 59.7 | 54.2 | 95.3 | 95.7 | 58.2 | 46.0 | 43.4 |
| | AROMATIC | | 0.0 | 26.5 | 0.0 | 0.0 | 0.0 | 0.0 | 29.6 | 29.3 | 29.7 |
| | OLEFIN | | 0.0 | 0.0 | 29.1 | 0.0 | 0.0 | 0.0 | 0.0 | 20.3 | 0.0 |
| | NAPHTHENE | | 0.1 | 0.1 | 0.1 | 30.1 | 0.1 | 0.0 | 0.1 | 0.1 | 19.9 |

In addition to Para 70 of 70 RON (a research octane number), Para 80 of 80 RON, and Para 90 of 90 RON, which are constituted by paraffin hydrocarbon alone, Arom 70, Ole 70 and Naph 70 were created at 70 RON by mixing aromatic hydrocarbon, olefin hydrocarbon, and naphthene hydrocarbon, respectively, into paraffin hydrocarbon at a volume percentage of approximately 30%. Further, at 90 RON, Arom 90 was created by mixing aromatic hydrocarbon into paraffin hydrocarbon at a volume percentage of approximately 30%, and Arom-Ole 90 and Arom-Naph 90 were created by mixing olefin hydrocarbon and naphthene hydrocarbon, respectively, at a volume percentage of approximately 20% into a fuel formed by mixing aromatic hydrocarbon into paraffin hydrocarbon at a volume percentage of approximately 30%. Furthermore, a distillation characteristic relating to evaporation and atomization of the various fuels, as well as a kinematic viscosity and a surface tension of the various fuels, were set to be equivalent to prevent differences from occurring when the fuels were used to form an air-fuel mixture.

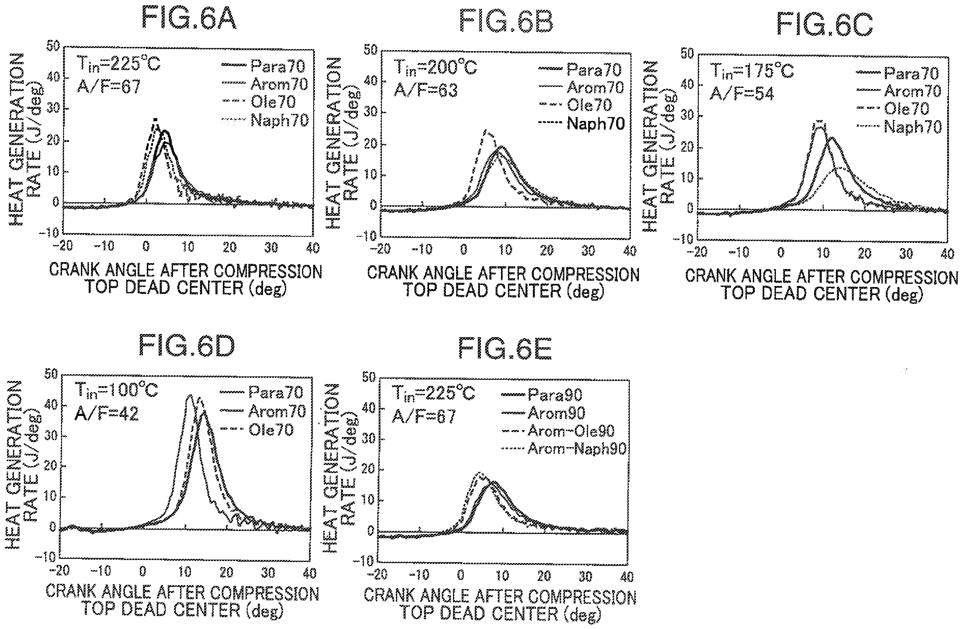

An intake air temperature ($T_{in}$) was varied from 225°C to 100°C and a relationship between the crank angle after compression top dead center and a heat generation rate was investigated at an air-fuel ratio (A/F) enabling a full-load (WOT) operation. Figs. 6A to 6E show the results. It was learned that when the fuel components vary, the ignitability also varies, even when the RON of the fuel is identical. More specifically, as shown in Fig. 6A, among the 70 RON fuels, the combustion timing of Ole 70 and Naph 70 at an intake air temperature of 225°C was advanced relative to Para 70, while the combustion timing of Arom 70 was identical to Para 70. However, when the intake air temperature was reduced, the combustion timing of Naph 70 was dramatically retarded, and at an intake air temperature of 150°C or lower, operations were not possible. Further, at an intake air temperature of 100°C, the combustion timing of Ole 70 and Arom 70 was advanced relative to Para 70. Meanwhile, among the 90 RON fuels, stable operations were possible only at an intake air temperature of 225°C, and ignitability trends among the fuel components at this time were identical to those of the 70 RON fuels at an intake air temperature of 225°C.

To clarify the effect of the fuel components on the ignition characteristic, first, the combustion timing of a fuel containing only paraffin hydrocarbon (to be referred to hereafter as a paraffin-based fuel) was formulated using an Arrhenius equation employing the MON (motor octane number). The combustion timing of a mixed fuel obtaining by mixing together a plurality of types was then predicted using this model equation, whereupon the effect of the fuel components was clarified by comparing the prediction with an experiment result.

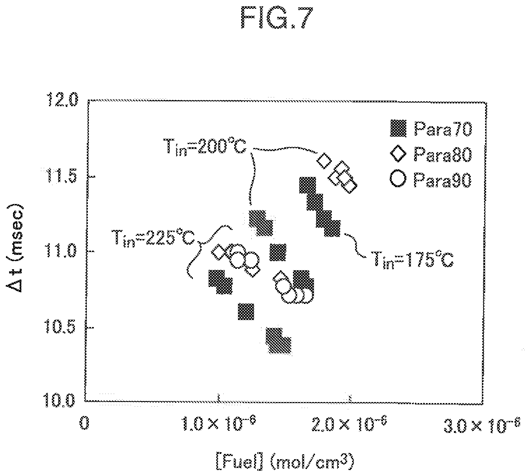

Fig. 7 shows the result of an investigation into a relationship between the ignition delay time $\Delta t$ (the time from a crank angle of 90° before compression top dead center to the timing at which the MBF reaches 50%) and the fuel molar density [Fuel] in the combustion chamber 6 at compression top dead center with respect to the paraffin-based fuel. This relationship was formulated using an Arrhenius Equation (6).

$$1/\Delta t = A \times T^n \times \exp(-E/RT) \times [O_2]^{\alpha} \times [Fuel]^{\beta} \qquad (6)$$

Here, E is an activation energy, R is a gas constant, T is the cylinder internal temperature, $[O_2]$ is an oxygen molar density in the combustion chamber, and [Fuel] is the fuel molar density in the combustion chamber. Values at compression top dead center were used as the cylinder internal temperature T, $[O_2]$, and [Fuel], while an activation temperature (-E/R) and an exponent $\beta$ of the fuel molar density were set as a functions of the MON respectively in order to respond to variation in the ignition delay time due to the MON. Further, the oxygen molar density is determined according to the intake air temperature, and therefore the exponent $\alpha$ was set at zero. In accordance with the relationship shown in Fig. 7, Equation (7) (to be referred to hereafter as a paraffin model equation) is obtained.

$$1/\Delta t = A \times T_{TDC}^n \times \exp(f(MON)/T_{TDC}) \times [Fuel]^{g(MON)} \qquad (7)$$

Here, $A = 4.60 \times 10^{-3}$, and $n = 5.71$. Further, f (MON) and g (MON) are functions of the MON, which are expressed by Equation (8) and Equation (9), respectively.

$$f(MON) = -71.4 \times MON + 1.09 \times 10^4 \qquad (8)$$

$$g(MON) = -0.400 \times 10^{-2} \times MON + 0.393 \qquad (9)$$

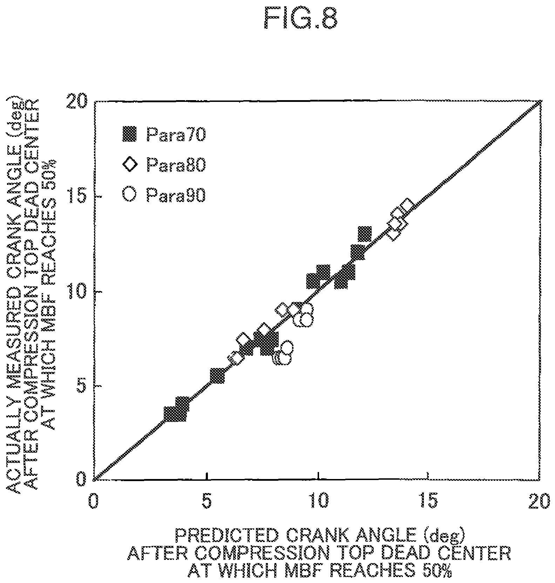

Fig. 8 shows a comparison between the prediction result (the predicted crank angle after compression top dead center at which the MBF reaches 50%) obtained using the paraffin model equation (7) and an experiment result (an actually measured crank angle after compression top dead center at which the MBF reaches 50%) with respect to the paraffin-based fuel. A line on which the predicted result matches the experiment result is drawn in Fig. 8. It was learned from this comparison that the combustion timing of the paraffin-based fuel can be predicted accurately by employing the compression top dead center temperature and the MON as indices.

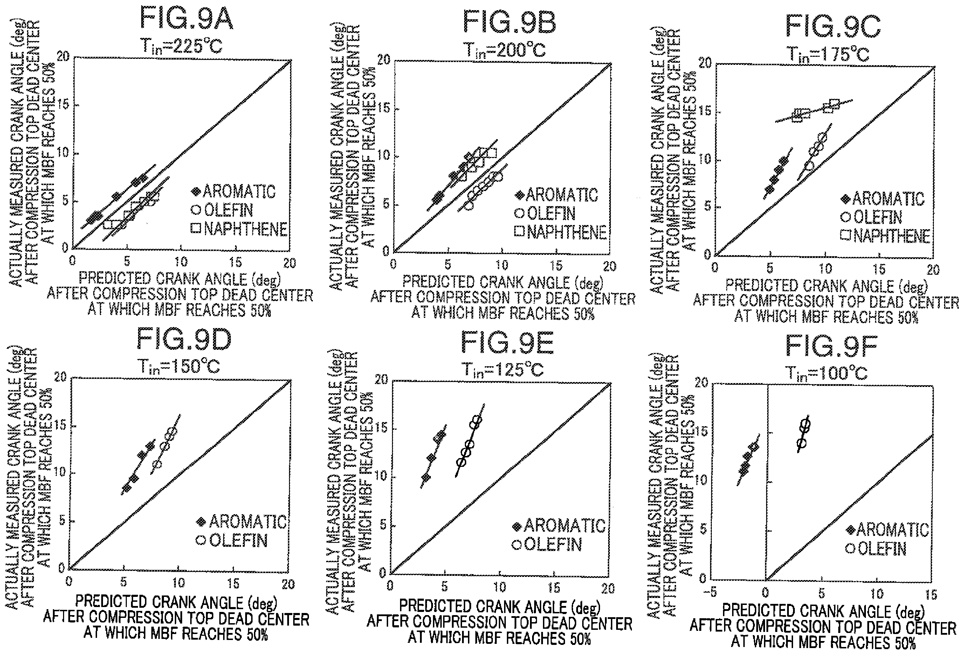

Figs. 9A to 9F show a comparison between prediction results obtained using the paraffin model equation (7) and experiment results at respective intake air temperatures with respect to a 70 RON mixed fuel. It can be learned from this comparison whether the combustion timing of the mixed fuel is accelerated or suppressed in comparison with a paraffin-based fuel having the same MON. It is evident that at an intake air temperature of 225°C (Fig. 9A), all fuels have an identical ignition characteristic to the paraffin-based fuel, but as the intake air temperature falls, a suppression effect acts, this effect being exhibited to the greatest extent with Naph 70.

Hence, the paraffin model equation (7) was expanded such that in addition to the reaction rate of the paraffin-based fuel, the reaction rates of the other fuel components were taken into account (expressed by an identical model equation to the paraffin model equation), and Equation (5) was derived using the coefficient Ci indicating the acceleration effect or suppression effect on the reaction of the paraffin-based fuel. Hereafter, Equation (5) will be referred to as a mixed fuel model equation.

Here, values shown in Table 2 were used as $MON_1$, $MON_2$, $MON_3$ and $MON_4$ while calculating $\Delta t$. More specifically, the aromatic hydrocarbon, olefin hydrocarbon and naphthene hydrocarbon used in the experiment were represented by toluene, 1-pentane and cyclohexane, respectively, and the MON of the paraffin-based fuel was calculated from the MONs of the various mixed fuels and the volume percentages of the respective fuel components.

[Table 2]

|  | Arom 70 | Ole 70 | Naph 70 |
|---|---|---|---|
| MON | 67.3 | 69.7 | 71.9 |
| $MON_2$ (TOLUENE) | 103.5 | 103.5 | 103.5 |
| $MON_3$ (1-PENTANE) | 77.1 | 77.1 | 77.1 |
| $MON_4$ (CYCLOHEXANE) | 77.2 | 77.2 | 77.2 |
| $MON_1$ (CALCULATION VALUE) | 54.3 | 66.6 | 69.7 |

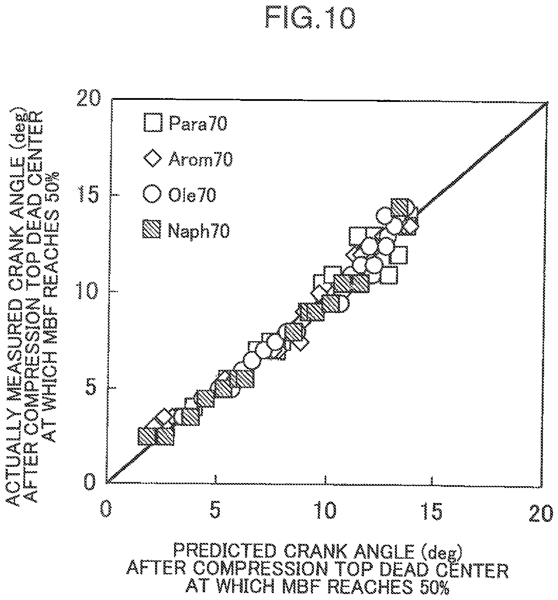

The coefficient $C_i$ was then optimized in relation to the mixed fuel experiment results shown in Figs. 9A to 9F to decrease prediction errors. The values of the optimized coefficients $C_2$, $C_3$ and $C_4$ were as shown in Figs. 5A to 5C. Fig. 10 shows a comparison between a prediction result obtained using the mixed fuel model equation (5), including the optimized coefficient $C_i$, and an experiment result with respect to the 70 RON mixed fuel. It can be seen from this comparison that the combustion timing of the 70 RON mixed fuel can be predicted within a crank angle of $\pm$ 2°.

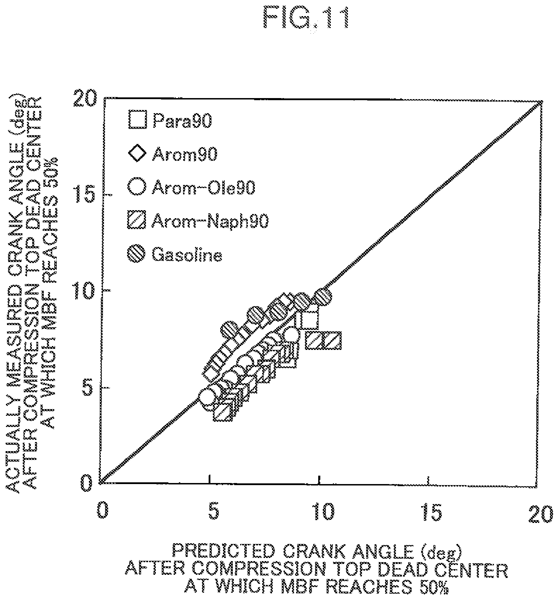

Further, a prediction result obtained using a mixed fuel model equation including the optimized coefficient $C_i$ was compared to an experiment result with respect to a 90 RON fuel and commercially obtained regular gasoline. The regular gasoline used here had paraffin-based fuel as a base and contained all of aromatic hydrocarbon, olefin hydrocarbon, and naphthene hydrocarbon. The regular gasoline had a RON of 90.9 and a MON of 82.4, and the volume percentages of the respective fuel components obtained through component analysis were used in the calculation. The results are shown in Fig. 11. It can be seen from the results that the combustion timing of the 90 RON fuel and regular gasoline can be predicted within a crank angle of $\pm$ 3°.

Hence, using the mixed fuel model equation described above, the combustion timing of a hydrocarbon fuel can be predicted accurately. Further, by controlling control parameters of an internal combustion engine in accordance with the predicted combustion timing obtained using this prediction method such that the combustion timing aligns with a predetermined timing, an output torque of the internal combustion engine can be stabilized.

Finally, an outline of the constitutions and effects of the above embodiment will be described.

The combustion timing prediction method for a compression self-ignition internal combustion engine according to the above embodiment predicts a combustion timing of a hydrocarbon fuel used in a compression self-ignition internal combustion engine that causes the hydrocarbon fuel in a combustion chamber to perform compression self-ignition. This prediction method includes the steps of: specifying types of a plurality of hydrocarbon components contained in the hydrocarbon fuel and proportions of the respective types in the hydrocarbon fuel; calculating, on the basis of a temperature in the combustion chamber of the internal combustion engine, a value of a first function serving as a function of the temperature for each of the specified types; calculating, on the basis of the proportion and the first function relating to each of the types, a value of a second function, which is a function that increases in value in response to an increase of the value of the first function and/or the proportion, for each of the specified types; integrating the values of the second function relating to the respective types; and predicting, on the basis of the integrated value of the values of the second function, the combustion timing of the hydrocarbon fuel in the internal combustion engine to be steadily later as the integrated value increases.

According to the combustion timing prediction method described above, the value of the first function is determined for each type of hydrocarbon component on the basis of the temperature in the combustion chamber (preferably the temperature at compression top dead center), the value of the second function is determined from the values of the first function and the proportions of the types, and the combustion timing is predicted on the basis of the integrated value of the values of the second function relating to each type. Hence, a predicted combustion timing that reflects temperature dependency, which is different for each type of hydrocarbon component, can be obtained, and as a result, the combustion timing of the hydrocarbon fuel can be predicted accurately.

The first function relating to each of the types is preferably a function of the temperature in the combustion chamber and a motor octane number of each of the types, and in the step of calculating the value of the first function, the value of the first function is preferably calculated for each of the specified types on the basis of the temperature and the motor octane number of each of the types.

Hence, the motor octane number of each type can be reflected in the predicted combustion timing, and therefore the combustion timing of the hydrocarbon fuel can be predicted even more accurately.

The combustion timing prediction method for a compression self-ignition internal combustion engine described above may be applied to a control method for a compression self-ignition internal combustion engine that causes a hydrocarbon fuel to perform compression self-ignition in a combustion chamber and a compression self-ignition internal combustion engine system.

More specifically, a control method for a compression self-ignition internal combustion engine includes a step of controlling a control parameter of the internal combustion engine on the basis of the predicted combustion timing obtained in the combustion timing prediction method described above.

Further, a compression self-ignition internal combustion engine system includes a compression self-ignition internal combustion engine that causes a hydrocarbon fuel in a combustion chamber to perform compression self-ignition and a controller for controlling the internal combustion engine. The controller: specifies types of a plurality of hydrocarbon components contained in the hydrocarbon fuel and proportions of the respective types in the hydrocarbon fuel; calculates, on the basis of a temperature in the combustion chamber of the internal combustion engine, a value of a first function serving as a function of the temperature for each of the specified types; calculates, on the basis of the proportion and the first function relating to each of the types, a value of a second function, which is a function that increases in value in response to an increase of the value of the first function and/or the proportion, for each of the specified types; integrates the values of the second function relating to the respective types; predicts, on the basis of the integrated value of the values of the second function, the combustion timing of the hydrocarbon fuel in the internal combustion engine to be steadily later as the integrated value increases; and controls a control parameter of the internal combustion engine on the basis of the predicted combustion timing.

According to the control method for a compression self-ignition internal combustion engine and the compression self-ignition internal combustion engine system described above, a control parameter of the internal combustion engine can be controlled in accordance with the predicted combustion timing such that the combustion timing aligns with a predetermined timing (such that an ignition timing is in the vicinity of compression top dead center, for example), and by executing this control, a stable output torque is obtained.

**Claims**

1. A combustion timing prediction method for a compression self-ignition internal combustion engine (1) that causes a hydrocarbon fuel in a combustion chamber (6) to perform compression self-ignition, with which a combustion timing of the hydrocarbon fuel used in the compression self-ignition internal combustion engine (1) is predicted, comprising the steps of:

   specifying a proportion of each of four types of hydrocarbon components consisting of paraffin hydrocarbon, aromatic hydrocarbon, olefin hydrocarbon, and naphthene hydrocarbon contained in the hydrocarbon fuel;
   calculating, on the basis of a motor octane number ($MON_i$) of each of the hydrocarbon components and a compression top dead center temperature ($T_{TDC}$) in the combustion chamber (6) of the internal combustion engine (1), a value of a first function ($F1_i$) serving as a function of the motor octane number ($MON_i$) and the compression top dead center temperature ($T_{TDC}$) for each of the hydrocarbon components;
   determining a coefficient ($C_i$) indicating a reaction acceleration effect or a reaction suppression effect of the respective hydrocarbon component relative to a reaction of the paraffin hydrocarbon, whereby the values of the coefficient ($C_i$) vary in accordance with the intake air temperature, and calculating, on the basis of the first function ($F1_i$), the proportion and the coefficient ($C_i$) relating to each of the hydrocarbon components, a value of a second function ($F2_i$), which is a function that increases in value in response to an increase of the value of any one of the first function ($F1_i$), the proportion and the coefficient ($C_i$), for each of the hydrocarbon components; integrating the values of the second function ($F2_i$) relating to the respective hydrocarbon components; and predicting, on the basis of the integrated value of the values of the second function ($F2_i$), the combustion timing of the hydrocarbon fuel in the internal combustion engine (1) to be later as the integrated value increases.

2. A control method for a compression self-ignition internal combustion engine that causes a hydrocarbon fuel to perform compression self-ignition in a combustion chamber (6), comprising a step of controlling a control parameter of the internal combustion engine (1) on the basis of the predicted combustion timing obtained in the combustion timing prediction method according to claim 1.

3. A compression self-ignition internal combustion engine system comprising a compression self-ignition internal combustion engine (1) that causes a hydrocarbon fuel in a combustion chamber (6) to perform compression self-ignition and a controller (30) for controlling the internal combustion engine (1), wherein the controller (30):

specifies a proportion of each of four types of hydrocarbon components consisting of paraffin hydrocarbon, aromatic hydrocarbon, olefin hydrocarbon, and naphthene hydrocarbon contained in the hydrocarbon fuel; calculates, on the basis of a motor octane number ($MON_i$) of each of the hydrocarbon components and a compression top dead center temperature ($T_{TDC}$) in the combustion chamber (6) of the internal combustion engine (1), a value of a first function ($F1_i$) serving as a function of the motor octane number ($MON_i$) and a compression top dead center temperature ($T_{TDC}$) for each of the hydrocarbon components; determines a coefficient ($C_i$) indicating a reaction acceleration effect or a reaction suppression effect of the respective hydrocarbon component relative to a reaction of the paraffin hydrocarbon, whereby the values of the coefficient ($C_i$) vary in accordance with the intake air temperature, and calculates, on the basis of the first function ($F1_i$), the proportion and the coefficient ($C_i$) relating to each of the hydrocarbon components, a value of a second function ($F2_i$), which is a function that increases in value in response to an increase of the value of any one of the first function ($F1_i$), the proportion and the coefficient ($C_i$), for each of the hydrocarbon components; integrates the values of the second function ($F2_i$) relating to the respective hydrocarbon components; predicts, on the basis of the integrated value of the values of the second function ($F2_i$), the combustion timing of the hydrocarbon fuel in the internal combustion engine (1) to be later as the integrated value increases; and controls a control parameter of the internal combustion engine (1) on the basis of the predicted combustion timing.

**Patentansprüche**

1. Verbrennungszeitpunktvorhersageverfahren für einen Kompressionsselbstzündungsverbrennungsmotor (1), der einen Kohlenwasserstoffkraftstoff in einem Brennraum (6) veranlasst, eine Kompressionsselbstzündung auszuführen, womit ein Verbrennungszeitpunkt des in dem Kompressionsselbstzündungsverbrennungsmotor (1) verwendeten Kohlenwasserstoffkraftstoffs vorhergesagt wird, umfassend die Schritte:

Angeben eines Anteils einer jeden von vier Arten von Kohlenwasserstoffkomponenten bestehend aus Paraffinkohlenwasserstoff, aromatischem Kohlenwasserstoff, Olefinkohlenwasserstoff und Naphthenkohlenwasserstoff, die in dem Kohlenwasserstoffkraftstoff enthalten sind; Berechnen, auf der Grundlage einer Motor-Oktanzahl ($MON_i$) jeder der Kohlenwasserstoffkomponenten und einer Temperatur bei Verdichtung am oberen Totpunkt ($T_{TDC}$) in dem Brennraum (6) des Verbrennungsmotors (1), eines Werts einer ersten Funktion ($F1_i$), die als Funktion der Motor-Oktanzahl ($MON_i$) und der Temperatur bei Verdichtung am oberen Totpunkt ($T_{TDC}$) für jede der Kohlenwasserstoffkomponenten dient; Ermitteln eines Koeffizienten ($C_i$), der eine Reaktionsbeschleunigungswirkung oder eine Reaktionshemmungswirkung der jeweiligen Kohlenwasserstoffkomponente relativ zu einer Reaktion des Paraffinkohlenwasserstoffs angibt, wodurch die Werte des Koeffizienten ($C_i$) gemäß der Ansaulufttemperatur schwanken, und Berechnen, auf der Grundlage der ersten Funktion ($F1_i$), des Anteils und des Koeffizienten ($C_i$) bezüglich jeder der Kohlenwasserstoffkomponenten, eines Werts einer zweiten Funktion ($F2_i$), die eine Funktion ist, die als Reaktion auf einen Anstieg des Werts eines von erster Funktion ($F1_i$), des Anteils und des Koeffizienten ($C_i$) steigt, für jede der Kohlenwasserstoffkomponenten im Wert steigt; Integrieren der Werte der zweiten Funktion ($F2_i$) bezüglich der jeweiligen Kohlenwasserstoffkomponenten; und Vorhersagen, auf der Grundlage des integrierten Werts der Werte der zweiten Funktion ($F2_i$), dass der Verbrennungszeitpunkt des Kohlenwasserstoffkraftstoffs in dem Verbrennungsmotor (1) bei Steigen des integrierten Werts später ist.

**2.** Steuerverfahren für einen Kompressionsselbstzündungsverbrennungsmotor, das einen Kohlenwasserstoffkraftstoff in einem Brennraum (6) veranlasst, Kompressionsselbstzündung auszuführen, umfassend einen Schritt des Steuerns eines Steuerparameters des Verbrennungsmotors (1) auf der Grundlage des in dem Verbrennungszeitpunktvorhersageverfahren nach Anspruch 1 erhaltenen vorhergesagten Verbrennungszeitpunkts.

**3.** Kompressionsselbstzündungsverbrennungsmotorsystem mit einem Kompressionsselbstzündungsverbrennungsmotor (1), das einen Kohlenwasserstoffkraftstoff in einem Brennraum (6) veranlasst, Kompressionsselbstzündung auszuführen, und mit einem Steuergerät (30) zum Steuern des Verbrennungsmotors (1), wobei das Steuergerät (30):

einen Anteil einer jeden von vier Arten von Kohlenwasserstoffkomponenten bestehend aus Paraffinkohlenwasserstoff, aromatischem Kohlenwasserstoff, Olefinkohlenwasserstoff und Naphthenkohlenwasserstoff, die in dem Kohlenwasserstoffkraftstoff enthalten sind, angibt;

auf der Grundlage einer Motor-Oktanzahl ($MON_i$) jeder der Kohlenwasserstoffkomponenten und einer Temperatur bei Verdichtung am oberen Totpunkt ($T_{TDC}$) in dem Brennraum (6) des Verbrennungsmotors (1), einen Wert einer ersten Funktion ($F1_i$) berechnet, die als Funktion der Motor-Oktanzahl ($MON_i$) und einer Temperatur bei Verdichtung am oberen Totpunkt ($T_{TDC}$) für jede der Kohlenwasserstoffkomponenten dient;

einen Koeffizienten ($C_i$) ermittelt, der eine Reaktionsbeschleunigungswirkung oder eine Reaktionshemmungswirkung der jeweiligen Kohlenwasserstoffkomponente relativ zu einer Reaktion des Paraffinkohlenwasserstoffs angibt, wodurch die Werte des Koeffizienten ($C_i$) gemäß der Ansauglufttemperatur schwanken, und auf der Grundlage der ersten Funktion ($F1_i$), des Anteils und des Koeffizienten ($C_i$) bezüglich jeder der Kohlenwasserstoffkomponenten einen Wert einer zweiten Funktion ($F2_i$) berechnet, die eine Funktion ist, die als Reaktion auf einen Anstieg des Werts eines von erster Funktion ($F1_i$), des Anteils und des Koeffizienten ($C_i$) für jede der Kohlenwasserstoffkomponenten steigt;

die Werte der zweiten Funktion ($F2_i$) bezüglich der jeweiligen Kohlenwasserstoffkomponenten integriert;

auf der Grundlage des integrierten Werts der Werte der zweiten Funktion ($F2_i$) vorhersagt, dass der Verbrennungszeitpunkt des Kohlenwasserstoffkraftstoffs in dem Verbrennungsmotor (1) bei Steigen des integrierten Werts später ist; und

einen Steuerparameter des Verbrennungsmotors (1) auf der Grundlage des vorhergesagten Verbrennungszeitpunkts steuert.

**Revendications**

**1.** Procédé de prédiction du point d'allumage pour un moteur à combustion interne (1) à autoallumage par compression qui amène un carburant à base d'hydrocarbures dans une chambre de combustion (6) à effectuer un autoallumage par compression, par lequel un point d'allumage du carburant à base d'hydrocarbures utilisé dans le moteur à combustion interne (1) à autoallumage par compression est prédit, comprenant les étapes consistant à :

spécifier une proportion de chacun de quatre types de composants hydrocarbures constitués des hydrocarbure paraffinique, hydrocarbure aromatique, hydrocarbure oléfinique, et hydrocarbure naphténique contenus dans le carburant à base d'hydrocarbures ;

calculer, sur la base d'un indice d'octane moteur ($MON_i$) de chacun des composants hydrocarbures et d'une température du point mort haut ($T_{TDC}$) de compression dans la chambre de combustion (6) du moteur à combustion interne (1), une valeur d'une première fonction ($F1_i$) servant comme fonction de l'indice d'octane moteur ($MON_i$) et de la température du point mort haut ($T_{TDC}$) de compression pour chacun des composants hydrocarbures ;

déterminer un coefficient ($C_i$) indiquant un effet d'accélération de réaction ou un effet de suppression de réaction du composant hydrocarbure respectif par rapport à une réaction de l'hydrocarbure paraffinique, les valeurs du coefficient ($C_i$) variant en fonction de la température de l'air d'admission, et calculer, sur la base de la première fonction ($F1_i$), de la proportion et du coefficient ($C_i$) relatifs à chacun des composants hydrocarbures, une valeur d'une seconde fonction ($F2_i$), qui est une fonction dont la valeur augmente en réponse à une augmentation de la valeur de l'un quelconque parmi la première fonction ($F1_i$),

la proportion et le coefficient ($C_i$), pour chacun des composants hydrocarbures ;

intégrer les valeurs de la seconde fonction ($F2_i$) relative aux composants hydrocarbures respectifs ; et

prédire, sur la base de la valeur intégrée des valeurs de la seconde fonction ($F2_i$), que le point d'allumage du carburant à base d'hydrocarbures dans le moteur à combustion interne (1) est plus tard au fur et à mesure que la valeur intégrée augmente.

**2.** Procédé de commande pour un moteur à combustion interne à autoallumage par compression qui amène un carburant à base d'hydrocarbures à effectuer un autoallumage par compression dans une chambre de combustion (6), comprenant une étape consistant à commander un paramètre de commande du moteur à combustion interne (1) sur la base du point d'allumage prédit obtenu dans le procédé de prédiction du point d'allumage selon la revendication 1.

**3.** Système de moteur à combustion interne à autoallumage par compression, comprenant un moteur à combustion interne (1) à autoallumage par compression qui amène un carburant à base d'hydrocarbures dans une chambre de combustion (6) à effectuer un autoallumage par compression et un dispositif de commande (30) pour commander le moteur à combustion interne (1), dans lequel le dispositif de commande (30) :

spécifie une proportion de chacun de quatre types de composants hydrocarbures constitués des hydrocarbure paraffinique, hydrocarbure aromatique, hydrocarbure oléfinique, et hydrocarbure naphténique contenus dans le carburant à base d'hydrocarbures ;

calcule, sur la base d'un indice d'octane moteur ($MON_i$) de chacun des composants hydrocarbures et d'une température du point mort haut ($T_{TDC}$) de compression dans la chambre de combustion (6) du moteur à combustion interne (1), une valeur d'une première fonction ($F1_i$) servant comme fonction de l'indice d'octane moteur ($MON_i$) et d'une température du point mort haut ($T_{TDC}$) de compression pour chacun des composants hydrocarbures ;

détermine un coefficient ($C_i$) indiquant un effet d'accélération de réaction ou un effet de suppression de réaction du composant hydrocarbure respectif par rapport à une réaction de l'hydrocarbure paraffinique, les valeurs du coefficient ($C_i$) variant en fonction de la température de l'air d'admission, et calcule, sur la base de la première fonction ($F1_i$), de la proportion et du coefficient ($C_i$) relatifs à chacun des composants hydrocarbures, une valeur d'une seconde fonction ($F2_i$), qui est une fonction dont la valeur augmente en réponse à une augmentation de la valeur de l'un quelconque parmi la première fonction ($F1_i$), la proportion et le coefficient ($C_i$), pour chacun des composants hydrocarbures ;

intègre les valeurs de la seconde fonction ($F2_i$) relative aux composants hydrocarbures respectifs ;

prédit, sur la base de la valeur intégrée des valeurs de la seconde fonction ($F2_i$), que le point d'allumage du carburant à base d'hydrocarbures dans le moteur à combustion interne (1) est plus tard au fur et à mesure que la valeur intégrée augmente ; et

commande un paramètre de commande du moteur à combustion interne (1) sur la base du point d'allumage prédit.

FIG.1

EP 2 312 142 B1

# FIG.2

## FIG.3

```
                    START

                       │
                       ▼
              ┌─────────────────────┐  ╭─ S1
              │ READ VARIOUS SIGNALS │
              └─────────────────────┘
                       │
                       ▼
         ┌──────────────────────────────┐  ╭─ S2
         │    CALCULATE ENGINE LOAD      │
         │ BASED ON ACCELERATOR OPENING  │
         │  AND ENGINE ROTATION SPEED    │
         └──────────────────────────────┘
                       │
                       ▼
         ┌──────────────────────────────┐  ╭─ S3
         │ DETERMINE OPERATING REGION    │
         │   BASED ON ENGINE ROTATION    │
         │   SPEED AND ENGINE LOAD       │
         └──────────────────────────────┘
                       │
                       ▼
                  ╱─────────╲   ╭─ S4
                 ╱  HCCI REGION ╲        NO
                 ╲      ?       ╱ ──────────────────┐
                  ╲─────────╱                       │
                       │ YES                        │
                       ▼                            ▼
         ┌──────────────────────┐ ╭─ S6   ┌──────────────────────┐ ╭─ S5
         │   SET HCCI MODE,      │        │     SET SI MODE,       │
         │  CALCULATE VARIOUS    │        │  CALCULATE VARIOUS     │
         │  CONTROL PARAMETERS   │        │  CONTROL PARAMETERS    │
         └──────────────────────┘        └──────────────────────┘
                       │                            │
                       ▼                            │
         ┌──────────────────────┐ ╭─ S7            │
         │ CALCULATE COMPRESSION │                 │
         │    TOP DEAD CENTER     │                 │
         │  TEMPERATURE $T_{TDC}$ │                 │
         └──────────────────────┘                 │
                       │                            │
                       ▼                            │
         ┌──────────────────────┐ ╭─ S8            │
         │   CALCULATE IGNITION   │                 │
         │  DELAY TIME $\Delta t$ │                 │
         └──────────────────────┘                 │
                       │                            │
                       ▼                            │
         ┌──────────────────────┐ ╭─ S9            │
         │ CORRECT VARIOUS CONTROL│                │
         │  PARAMETERS BASED ON   │                 │
         │ IGNITION DELAY TIME $\Delta t$ │         │
         └──────────────────────┘                 │
                       │◄───────────────────────────┘
                       ▼
                   RETURN
```

17

# FIG.4

FIG.5A

FIG.5B

FIG.5C

FIG.6A

FIG.6B

FIG.6C

FIG.6D

FIG.6E

EP 2 312 142 B1

FIG.7

## FIG.8

## FIG.9A
### $T_{in}=225°C$

## FIG.9B
### $T_{in}=200°C$

## FIG.9C
### $T_{in}=175°C$

## FIG.9D
### $T_{in}=150°C$

## FIG.9E
### $T_{in}=125°C$

## FIG.9F
### $T_{in}=100°C$

FIG.10

# FIG.11

**EP 2 312 142 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008095539 A

- JP 2001355449 A

**Non-patent literature cited in the description**

- A Study of Auto-Ignition Characteristics of Hydrocarbons and the Idea of HCCI Fuel Index (Second Report). **GEN SHIBATA.** Society of Automotive Engineers of Japan 2007 Annual Congress (Spring), Pre-Congress Collection of Printed Scientific Lectures No. 54-07. Society of Automotive Engineers of Japan, May 2007, 29-34

- **C. VILJOEN.** An Investigation of the Ignition Delay Character of Different Fuel Components and an Assessment of Various Autoignition Modelling Approaches. *Society of Automotive Engineers International,* 11 May 2005